# EUROPEAN PATENT SPECIFICATION

(11) **EP 2 715 491 B1**
(45) Date of publication and mention of the grant of the patent: **12.06.2019**
(21) Application number: 11866745.0
(22) Date of filing: 09.10.2011
(51) Int. Cl.: G06F 3/0488

(54) **EDGE GESTURE**
RANDGESTE
GESTE DE BORD

(30) Priority: 27.05.2011 US 201113118221
(43) Date of publication of application: 09.04.2014
(73) Proprietor: Microsoft Technology Licensing, LLC, Redmond, WA 98052 (US)
(72) Inventor: NAN, Jennifer, Redmond, Washington 98052-6399 (US); SATTERFIELD, Jesse Clay, Redmond, Washington 98052-6399 (US); MATTHEWS, David A., Redmond, Washington 98052-6399 (US); RUSSO, Thomas P., Redmond, Washington 98052-6399 (US); JARRETT, Robert J., Redmond, Washington 98052-6399 (US); ZHAO, Weidong, Redmond, Washington 98052-6399 (US); HARRIS, Jensen, Redmond, Washington 98052-6399 (US); SAREEN, Chaitanya Dev, Redmond, Washington 98052-6399 (US)
(74) Representative: Goddar, Heinz J.
(86) International application number: PCT/US2011/055513
(87) International publication number: WO 2012/166176

(56) References cited:
- EP-A2- 1 962 480
- KR-A- 20080 041 809
- US-A- 5 821 930
- US-A1- 2009 189 868
- US-A1- 2010 013 782
- US-A1- 2010 105 443
- US-A1- 2010 185 989
- 'Android UsersGuide Ver2.' GOOGLE 13 December 2010, page 27, XP007918504

## Description

### BACKGROUND

Conventional techniques for selecting a user interface that is not currently exposed on a display are often confusing, take up valuable display space, cannot be universally applied across different devices, or provide a poor user experience.

Some conventional techniques, for example, enable selection of a user interface through onscreen controls in a task bar, within a floating window, or on a window frame. These onscreen controls, however, take up valuable display real estate and can annoy users by requiring users to find and select the correct control.

Some other conventional techniques enable selection of a user interface through hardware, such as hot keys and buttons. At best these techniques require users to remember what key, key combination, or hardware button to select. Even in this best case users often accidentally select keys or buttons. Further, in many cases hardware-selection techniques cannot be universally applied, as hardware on computing devices can vary by device model, generation, vendor, or manufacturer. In such cases either the techniques will not work or work differently across different computing devices. This exacerbates the problem of users needing to remember the correct hardware, as many users have multiple devices, and so may need to remember different hardware selections for different devices. Further still, for many computing devices hardware selection forces users to engage a computing device outside the user's normal flow of interaction, such as when a touchscreen device requires a user to change his or her mental and physical orientation from display-based interactions to hardware -based interactions.

US 2010/105443 A1 discloses a mobile terminal with a touch screen display configured to display a user interface. For invoking another user interface, different from the currently displayed user interface, a trigger touch interaction in form of a slide-in gesture is proposed, wherein the slide-in gesture is performed by sliding an input object along a path from a point of origin in a touch-insensitive area outside of the touch screen display to a point within the touch screen display. Various criteria are disclosed that allow to distinguish the trigger touch interaction from a touch interaction used for activating or dragging a content object of the currently displayed user interface that is close to the edge of the touch screen display. For example, a trigger touch interaction is determined if the first detected point of the touch interaction is immediately adjacent to the edge of the touch screen display and the input object, upon crossing the edge of the touch screen display, is slid at an initial rate greater than a predefined threshold. An additional or alternative criterion for a touch interaction being identified as a trigger touch interaction comprises the path of the input object from the point of origin to a point within the touch screen display not traversing a content object of the currently displayed user interface for a predefined time period or a predefined distance following the input object crossing the edge of the touch screen display.

US 2010/185989 A1 discloses a hand-held computing device with a touch-sensitive screen and a touch-sensitive gesture area located adjacent to a lower edge of the touch-sensitive screen. A launch wave comprising a plurality of application icons is invoked from a screen displaying a user interface for a currently active application in response to a user performing a touch gesture that begins in the gesture area and continues in an upward direction onto the touch-sensitive screen. In one embodiment, the launch wave is presented once the gesture has extended a sufficient distance beyond the lower edge of the touch-sensitive screen.

US 5 821 930 discloses a method for invoking from a touch-sensitive screen an icon bar comprising a plurality of application icons in response to a trigger gesture. Using the example of a horizontal stroke and a vertical edge of the touch-sensitive screen, it is suggested to identify the stroke as the trigger gesture for displaying the icon bar if the stroke starts within a predetermined distance from the vertical edge and continues approximately horizontally (i.e. perpendicular to the vertical edge) at least until the distance travelled in the horizontal direction has reached a predetermined horizontal threshold distance, and wherein the distance travelled in the vertical direction may not exceed a predetermined vertical threshold distance before the distance travelled in the horizontal direction has exceeded the predetermined horizontal threshold distance. A touch input performed on a working window displayed on the touch-sensitive screen is only passed to the working window if it starts in the working window with more than the predetermined distance from the edge of the touch-sensitive screen. Gestures that start within the predetermined distance from the edge but are not performed in a direction approximately perpendicular to the edge are discarded.

EP 1 962 480 A2 discloses controlling the displaying of a specific menu list on a touch screen according to a distance of a touch and drag operation. If a user drags a touch object on the touch screen by a distance longer than or equal to a first distance and shorter than a second distance, the menu list is displayed.

US 2009/189868 A1 discloses detecting a multipoint stroke on a touch screen starting near an edge and moving toward the center, and responsive thereto, dividing the screen area of the touch screen and causing a higher list containing other items to be displayed.

### SUMMARY

The present invention is defined by the appended independent claim 1. The dependent claims define advantageous embodiments.

This document describes techniques and apparatuses enabling an edge gesture. In some embodiments, these techniques and apparatuses enable selection of a user interface not currently exposed on a display through an edge gesture that is easy-to-use and remember.

This summary is provided to introduce simplified concepts for enabling an edge gesture that are further described below in the Detailed Description. This summary is not intended to identify essential features of the claimed subject matter, nor is it intended for use in determining the scope of the claimed subject matter. Techniques and/or apparatuses enabling an edge gesture are also referred to herein separately or in conjunction as the "techniques" as permitted by the context.

The embodiments and/or examples of the following Detailed Description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

Embodiments enabling an edge gesture are described with reference to the following drawings. The same numbers are used throughout the drawings to reference like features and components:
Fig. 1 illustrates an example system in which techniques enabling an edge gesture can be implemented.
Fig. 2 illustrates an example method for enabling edge gestures based on the edge gesture being approximately perpendicular to an edge in which the gesture begins.
Fig. 3 illustrates an example tablet computing device having a touch-sensitive display presenting an immersive interface.
Fig. 4 illustrates the example immersive interface of Fig. 3 along with example edges.
Fig. 5 illustrates the example immersive interface of Figs. 3 and 4 along with angular variance lines from a perpendicular line and a line from a start point to a later point of a gesture.
Fig. 6 illustrates the edges of the immersive interface shown in Fig. 4 along with two regions in the right edge.
Fig. 7 illustrates an application-selection interface presented by a system-interface module in response to an edge gesture and over the immersive interface and webpage of Fig. 3.
Fig. 8 illustrates an example method for enabling edge gestures including determining an interface to present based on some factor of the gesture.
Fig. 9 illustrates an example method enabling expansion of, or ceasing presentation of, a user interface presented in response to an edge gesture or presentation of another user interface.
Fig 10 illustrates a laptop computer having a touch-sensitive display having a windows-based email interface and two immersive interfaces.
Fig. 11 illustrates the interfaces of Fig. 10 along with two gestures having a start point, later points, and one or more successive points.
Fig. 12 illustrates the windows-based email interface of Figs. 10 and 11 along with an email handling interface presented in response to an edge gesture.
Fig. 13 illustrates the interfaces of Fig. 12 along with an additional-email-options interface presented in response to a gesture determined to have a successive point a preset distance from the edge.
Fig. 14 illustrates an example device in which techniques enabling edge gestures can be implemented.

### DETAILED DESCRIPTION

### Overview

This document describes techniques and apparatuses enabling an edge gesture. These techniques enable a user to quickly and easily select an interface not currently exposed on the user's device, as well as other operations.

Consider a case where a user is watching a movie on a tablet computing device. Assume that the movie is playing on an immersive interface occupying all of the display and that the user would like to check her social-networking webpage without stopping the movie. The described techniques and apparatuses enable her to select other interfaces through a simple swipe gesture started at an edge of her display. She may swipe from one edge of her display and drag out a user interface enabling her to select her social networking website. Or instead, assume that she would like to interact with the media application playing the movie in a manner not permitted by the immersive interface, such as to display a menu enabling subtitles or a director's commentary. She may swipe from another edge of her tablet's display and drag out a control menu for the immersive interface and select items and/or commands from this menu quickly and easily.

In both of these cases valuable real estate used to play the movie was not taken up with on-screen controls, nor was the user required to remember and find a hardware button. Further still, no gesture, other than one starting from an edge, is used by the techniques in this example, thereby permitting the immersive interface to use nearly all commonly-available gestures. Additionally, by considering edge gestures or portions thereof, the techniques do not affect performance of a gesture or touch input system as the edge gestures can be processed before the entire gesture is complete avoiding latency associated with processing entire gestures started elsewhere.

These are but two examples of the many ways in which the techniques enable and use edge gestures, others of which are described below.

### Example System

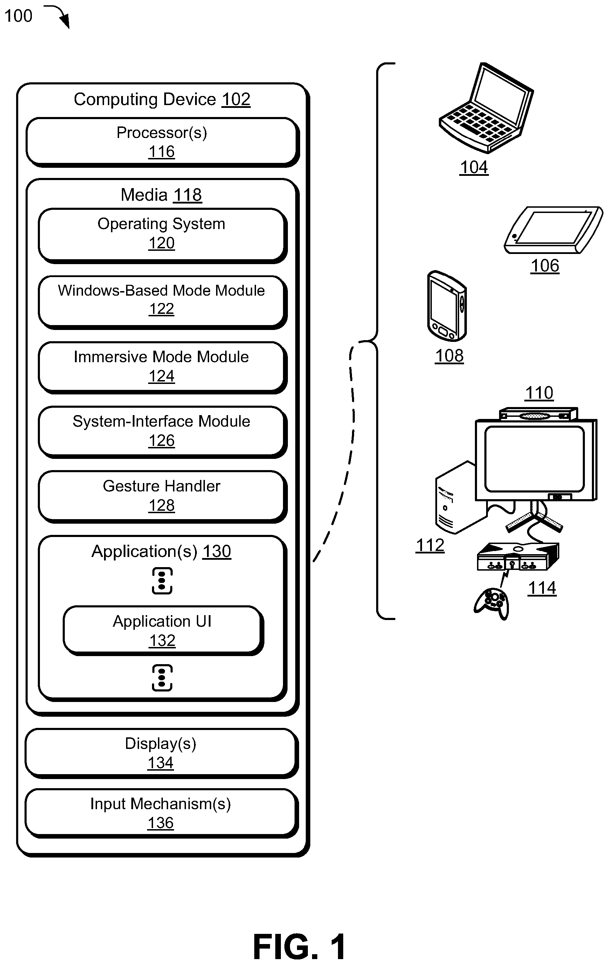

Fig. 1 illustrates an example system 100 in which techniques enabling an edge gesture can be embodied. System 100 includes a computing device 102, which is illustrated with six examples: a laptop computer 104, a tablet computer 106, a smart phone 108, a set-top box 110, a desktop computer 112, and a gaming device 114, though other computing devices and systems, such as servers and netbooks, may also be used.

Computing device 102 includes computer processor(s) 116 and computer-readable storage media 118 (media 118). Media 118 includes an operating system 120, windows-based mode module 122, immersive mode module 124, system-interface module 126, gesture handler 128, and one or more applications 130, each having one or more application user interfaces 132.

Computing device 102 also includes or has access to one or more displays 134 and input mechanisms 136. Four example displays are illustrated in Fig. 1. Input mechanisms 136 may include gesture-sensitive sensors and devices, such as touch-based sensors and movement-tracking sensors (e.g., camera-based), as well as mice (freestanding or integral with a keyboard), track pads, and microphones with accompanying voice recognition software, to name a few. Input mechanisms 136 may be separate or integral with displays 134; integral examples include gesture-sensitive displays with integrated touch-sensitive or motion-sensitive sensors.

Windows-based mode module 122 presents application user interfaces 132 through windows having frames. These frames may provide controls through which to interact with an application and/or controls enabling a user to move and resize the window.

Immersive mode module 124 provides an environment by which a user may view and interact with one or more of applications 130 through application user interfaces 132. In some embodiments, this environment presents content of, and enables interaction with, applications with little or no window frame and/or without a need for a user to manage a window frame's layout or primacy relative to other windows (e.g., which window is active or up front) or manually size or position application user interfaces 132.

This environment can be, but is not required to be, hosted and/or surfaced without use of a windows-based desktop environment. Thus, in some cases immersive mode module 124 presents an immersive environment that is not a window (even one without a substantial frame) and precludes usage of desktop-like displays (e.g., a taskbar). Further still, in some embodiments this immersive environment is similar to an operating system in that it is not closeable or capable of being un-installed. While not required, in some cases this immersive environment enables use of all or nearly all of the pixels of a display by applications. Examples of immersive environments are provided below as part of describing the techniques, though they are not exhaustive or intended to limit the techniques described herein.

System-interface module 126 provides one or more interfaces through which interaction with operating system 120 is enabled, such as an application-launching interface, a start menu, or a system tools or options menu, to name just a few.

Operating system 120, modules 122, 124, and 126, as well as gesture handler 128 can be separate from each other or combined or integrated in any suitable form.

### Example Methods

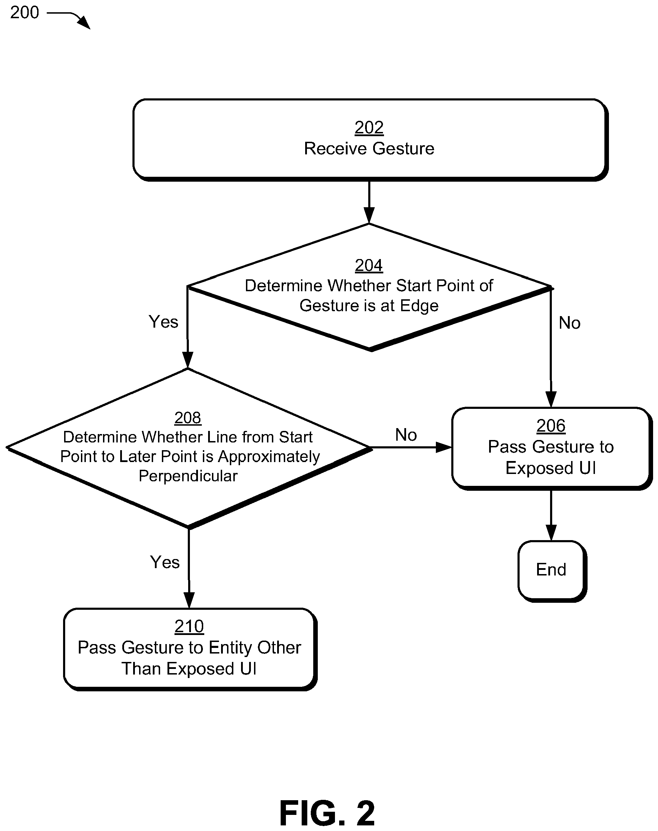

Fig. 2 depicts a method 200 for enabling edge gestures based on the edge gesture being approximately perpendicular to an edge in which the gesture begins. In portions of the following discussion reference may be made to system 100 of Fig. 1, reference to which is made for example only.

Block 202 receives a gesture. This gesture may be received at various parts of a display, such as over a windows-based interface, an immersive interface, or no interface. Further, this gesture may be made and received in various manners, such as a pointer tracking a movement received through a touch pad, mouse, or roller ball or a physical movement made with arm(s), finger(s), or a stylus received through a motion-sensitive or touch-sensitive mechanism. In some cases, the gesture is received off of or proximate to a physical edge of the display (e.g., as a finger or stylus encounters the edge of the display) by a touch digitizer, a capacitive touch screen, or a capacitive sensor, just to name a few.

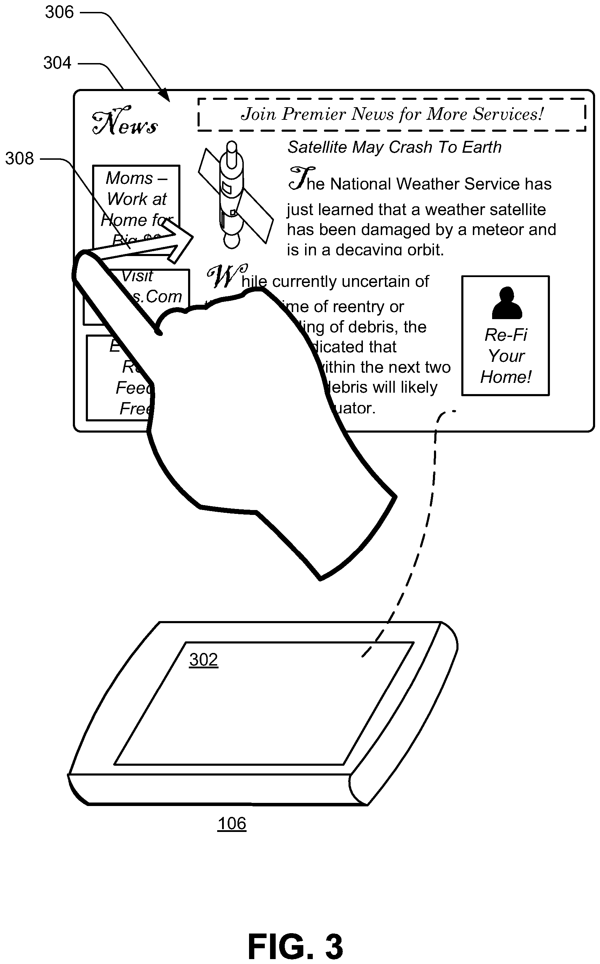

By way of example consider Fig. 3, which illustrates a tablet computing device 106. Tablet 106 includes a touch-sensitive display 302 shown displaying an immersive interface 304 that includes a webpage 306. As part of an ongoing example, at block 202 gesture handler 128 receives gesture 308 as shown in Fig. 3.

Block 204 determines whether a start point of the gesture is at an edge. As noted above, the edge in question can be an edge of a user interface, whether immersive or windows-based, and/or of a display. In some cases, of course, an edge of a user interface is also an edge of a display. The size of the edge can vary based on various factors about the display or interface. A small display or interface may have a smaller size in absolute or pixel terms than a large display or interface. A highly sensitive input mechanism permits a smaller edge as well. In some instances, an edge may extend beyond an edge of the display or a screen when an input mechanism is able to receive a gesture portion beyond the display or screen. Example edges are rectangular and vary between one and twenty pixels in one dimension and an interface limit of the interface or display in the other dimension, though other sizes and shapes, including convex and concave edges may instead be used.

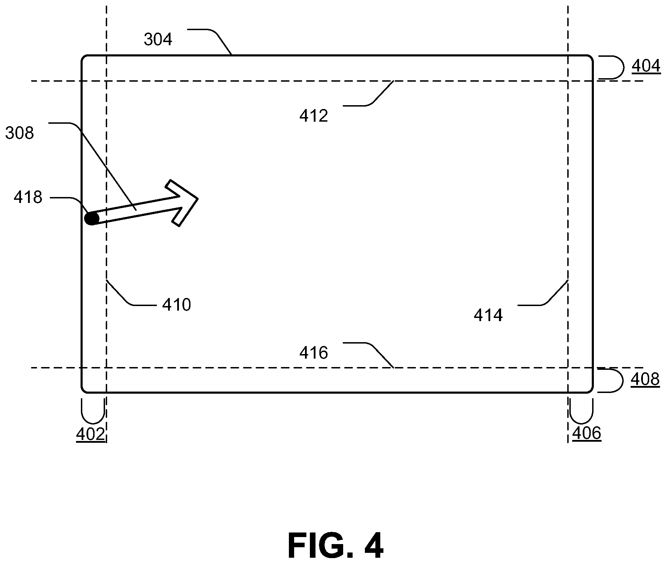

Continuing the ongoing example, consider Fig. 4, which illustrates immersive interface 304 and gesture 308 of Fig. 3 as well as left edge 402, top edge 404, right edge 406, and bottom edge 408. For visual clarity webpage 306 is not shown. In this example the dimensions of the interface and display are of a moderate size, between that of smart phones and that of many laptop and desktop displays. Edges 402, 404, 406, and 408 have a small dimension of twenty pixels or about 10-15mm in absolute terms, an area of each shown bounded by dashed lines at twenty pixels from the display limit at edge limit 410, 412, 414, and 416, respectively.

Gesture handler 128 determines that gesture 308 has a start point 418 and that this start point 418 is within left edge 402. Gesture handler 128 determines the start point in this case by receiving data indicating [X,Y] coordinates in pixels at which gesture 308 begins and comparing the first of these coordinates to those pixels contained within each edge 402-408. Gesture handler 128 often can determine the start point and whether it is in an edge faster than a sample rate, thereby causing little or no performance downgrade from techniques that simply pass gestures directly to an exposed interface over which a gesture is made.

Returning to method 200 generally, if block 204 determines that the start point of the gesture is not at an edge, method 200 proceeds along a "No" path to block 206. Block 206 passes the gestures to an exposed user interface, such as an underlying interface over which the gesture was received. Altering the ongoing example, assume that gesture 308 was determined not to have a start point within an edge. In such a case gesture handler 128 passes buffered data for gesture 308 to immersive user interface 304. After passing the gesture, method 200 ends.

If block 204 determines that the start point of the gesture is in an edge, method 200 proceeds along a "Yes" path to block 208. Optionally, block 204 may determine a length of a portion of the gesture before method proceeds to block 208. In some cases, determining the length of the portion of the gesture allows the determination of the start point to be made prior to a completion of the gesture. Block 208 responds to the positive determination of block 204 by determining whether a line from the start point to a later point of the gesture is approximately perpendicular from the edge.

Block 208 determines the later point used. According to an example not covered by the claims, gesture handler 128 can determine the later point of the gesture based on the later point being received a preset distance from the edge, such as past edge limit 410 for edge 402 of Fig. 4. According to the present invention, gesture handler 128 determines the later point of the gesture based on the later point being received a preset distance from the start point, such as twenty pixels from start point 418 of Fig. 4. Alternatively, the present invention envisages that the gesture handler 128 determines the later point based on it being received a preset time after receipt of the start point, such an amount of time slightly greater than used generally by computing device 102 to determine that a gesture is a tap-and-hold or hover gesture.

For the ongoing embodiment, gesture handler 128 uses a later-received point of gesture 308 received outside of edge 402 so long as that later-received point is received within a preset time. If no point is received outside of the edge within that preset time, gesture handler 128 proceeds to block 206 and passes gesture 308 to immersive interface 304.

Using the start point, block 208 determines whether a line from the start point to the later point of the gesture is approximately perpendicular to the edge. Various angles of variance can be used in this determination by block 208, such as five, ten, twenty, or thirty degrees.

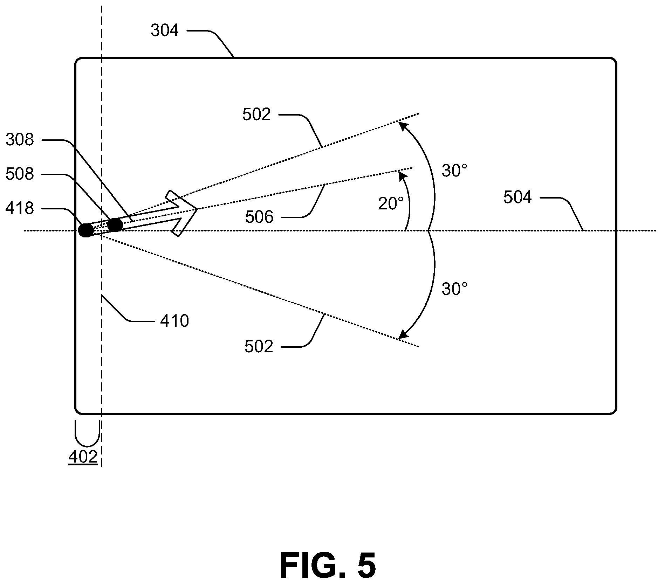

By way of example, consider an angle of variance of thirty degrees from perpendicular. Fig. 5 illustrates this example variance, showing immersive interface 304, gesture 308, left edge 402, left edge limit 410, and start point 418 of Figs. 3 and 4 along with a thirty-degree variance lines 502 from perpendicular line 504. Thus, gesture handler 128 determines that line 506 from start point 418 to later point 508 (which is at about twenty degrees from perpendicular) is approximately perpendicular based on being within the example thirty-degree variance line 502.

Generally, if block 208 determines that the line is not approximately perpendicular to the edge, method 200 proceeds along a "No" path to block 206 (e.g., a path of a finger is curved). As noted in part above, block 208 may also determine that a later point or other aspect of a gesture disqualifies the gesture. Examples include when a later point is within the edge, such as due to a hover, tap, press-and-hold, or up-and-down gesture (e.g., to scroll content in the user interface), when the gesture is set to be a single-input gesture and a second input is received (e.g., a first finger starts at an edge but a second finger then lands anywhere), or if a tap event occurs during or prior to the gesture (e.g., a finger is already making contact elsewhere or contact is received elsewhere during the gesture).

If block 208 determines that the line is approximately perpendicular based on a later point outside the edge, method 200 proceeds along a "Yes" path to block 210.

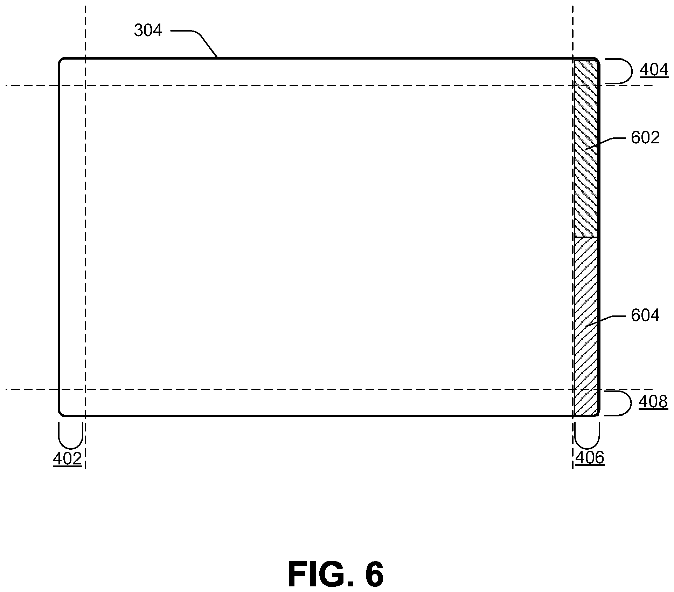

Block 210 responds to the positive determination of block 208 by passing the gesture to an entity other than the exposed user interface. This entity is not a user interface over which the gesture was received, assuming it was received over a user interface at all. Block 210 may determine to which entity to pass the gesture as well, such as based on an edge or region of an edge in which the start point of the gesture is received. Consider Fig. 6, for example, which illustrates immersive interface 304 and edges 402, 404, 406, and 408 of Fig. 4 but adds top region 602 and bottom region 604 to right edge 406. A start point in top region 602 can result in a different entity (or even a same entity but a different user interface provided in response) than a start point received to bottom region 604. Likewise, a start point in top edge 404 can result in a different entity or interface than left edge 402 or bottom edge 408.

In some cases, this entity is an application associated with the user interface. In such a case, passing the gesture to the entity can be effective to cause the application to present a second user interface enabling interaction with the application. In the movie example above, the entity can be the media player playing the movie but not the immersive interface displaying the movie. The media player can then present a second user interface enabling selection of subtitles or a director's commentary rather than selections enabled by the interface displaying the movie, such as "pause," "play," and "stop." This capability is permitted in Fig. 1, where one of applications 130 can include or be capable of presenting more than one application user interface 132. Thus, block 210 can pass the gesture to system-interface module 126, the one of applications 130 currently presenting the user interface, or another of applications 130, to name just three possibilities.

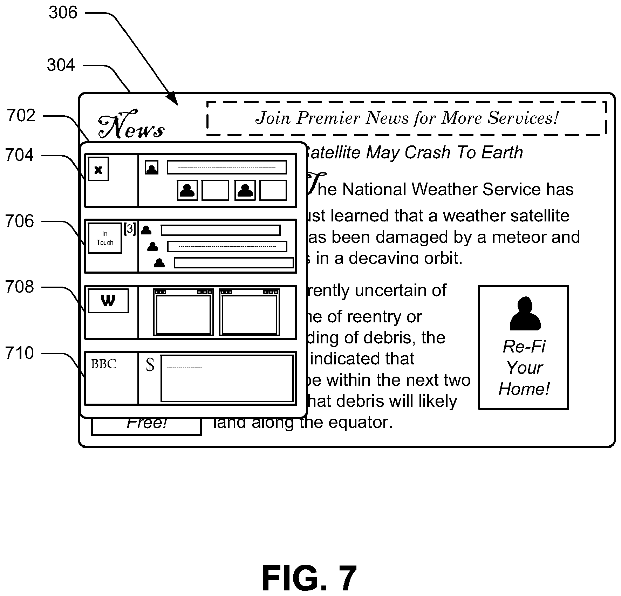

Concluding the ongoing embodiment, at block 210 gesture handler 128 passes gesture 308 to system-interface module 126. System-interface module 126 receives the buffered portion of gesture 308 and continues to receive the rest of gesture 308 as it is made by the user. Fig. 7 illustrates a possible response upon receiving gesture 308, showing an application-selection interface 702 presented by system-interface module 126 and over immersive interface 304 and webpage 306 from Fig. 3. Application-selection interface 702 enables selection of various other applications and their respective interfaces at selectable application tiles 704, 706, 708, and 710.

The example application-selection interface 702 is an immersive user interface presented using immersive mode module 124, though this is not required. Presented interfaces, or a list thereof, may instead be windows-based and presented using windows-based module 122. Both of these modules are illustrated in Fig. 1.

Block 210 may also or instead determine to pass the gesture to different entities and/or interfaces based on other factors about the gesture received. Example factors are described in greater detail in method 800 below.

Note that method 200 and other methods described hereafter can be performed in real-time, such as while a gesture is being made and received. This permits, among other things, a user interface presented in response to a gesture to be presented prior to completion of the gesture. Further, the user interface can be presented progressively as the gesture is received. This permits a user experience of dragging out the user interface from the edge as the gesture is performed with the user interface appearing to "stick" to the gesture (e.g., to a mouse point or person's finger making the gesture).

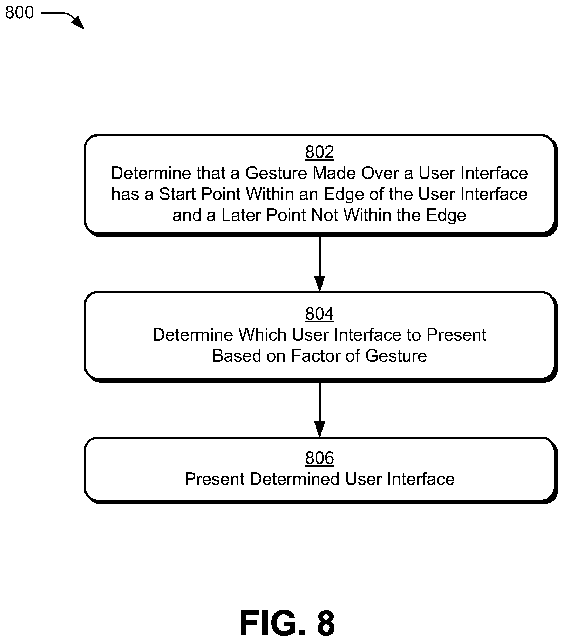

Fig. 8 depicts a method 800 for enabling edge gestures including determining an interface to present based on some factor of the gesture. In portions of the following discussion reference may be made to system 100 of Fig. 1, reference to which is made for example only. Method 800 may act wholly or partly separate from, or in conjunction with, other methods described herein.

Block 802 determines that a gesture made over a user interface has a start point at an edge of the user interface and a later point not within the edge. Block 802 may operate similarly to or use aspects of method 200, such as determining a later point on which to base block 802's determination. Block 802 may act differently as well.

In one example that is not covered by the claims, block 802 determines that a gesture is a single-finger swipe gesture starting at an edge of an exposed immersive user interface and having a later point not at the edge but not based on an angle of the gesture. Based on this determination, block 802 proceeds to block 804 rather than pass the gesture to the exposed immersive user interface.

Block 804 determines which interface to present based on one or more factors of the gesture. Block 804 may do so based on a final or intermediate length of the gesture, whether the gesture is single or multi-point (e.g., single-finger or multi-finger), or a speed of the gesture. In some cases, two or more factors of a gesture determine which interface to present such as a drag-and-hold gesture having a drag length and hold time or a drag-and-drop gesture having a drag length and drop position. Thus, block 804 may determine to present a start menu in response to a multi-finger gesture, an application-selection interface in response to a relatively short single-finger gesture, or a system-control interface permitting selection to shut down computing device 102 in response to relatively long single-finger gesture, for example. To do so, gesture handler 128 may determine the length of the gesture, speed, or a number of inputs (e.g., fingers).

In response, block 806 presents the determined user interface. The determined user interface can be any of those mentioned herein as well as a whole new visual such as a new page of an e-book, an additional visual (e.g., a toolbar or navigation bar), or a modified view of a current user interface (presenting text of a current user interface in a different font, color or highlighting). In some cases, visual or non-visual effects may be presented such as actions related to a video game or sound effects associated with the current or presented user interface.

Assume, by way of example, that gesture handler 128 determines, based on a factor of the gesture, to present a user interface enabling interaction with operating system 120. In response system-interface module 126 presents this user interface. Presentation of the user interface can be similar to manners described in other methods, such as with a progressive display of application-selection user interface 702 of Fig. 7.

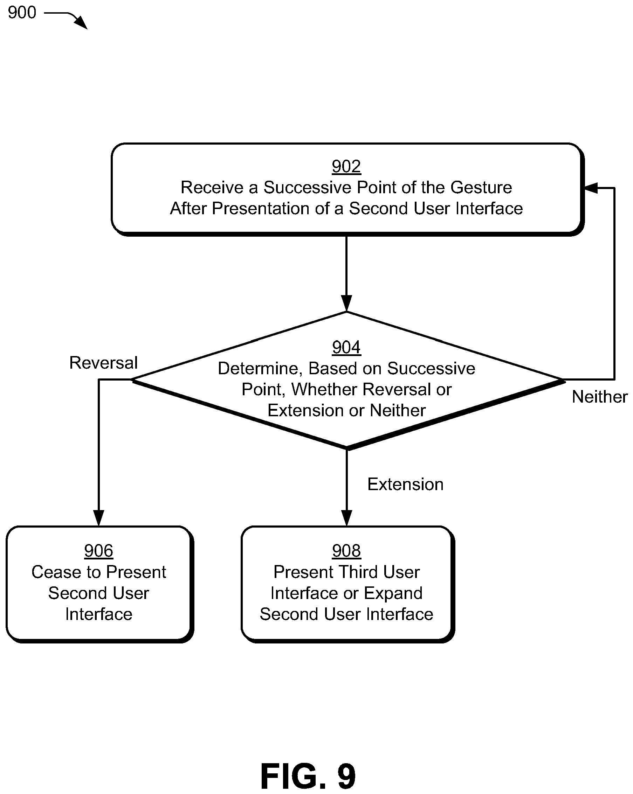

Following method 200 and/or method 800 in whole or in part, the techniques may proceed to perform method 900 of Fig. 9. Method 900 enables expansion of a user interface, presentation of another interface, or ceasing presentation of the user interface presented in response to an edge gesture.

Block 902 receives a successive point of the gesture and after presentation of at least some portion of the second user interface. As noted in part above, methods 200 and/or 800 are able to present or cause to be presented a second user interface, such as a second user interface for the same application associated with a current user interface, a different application, or a system user interface.

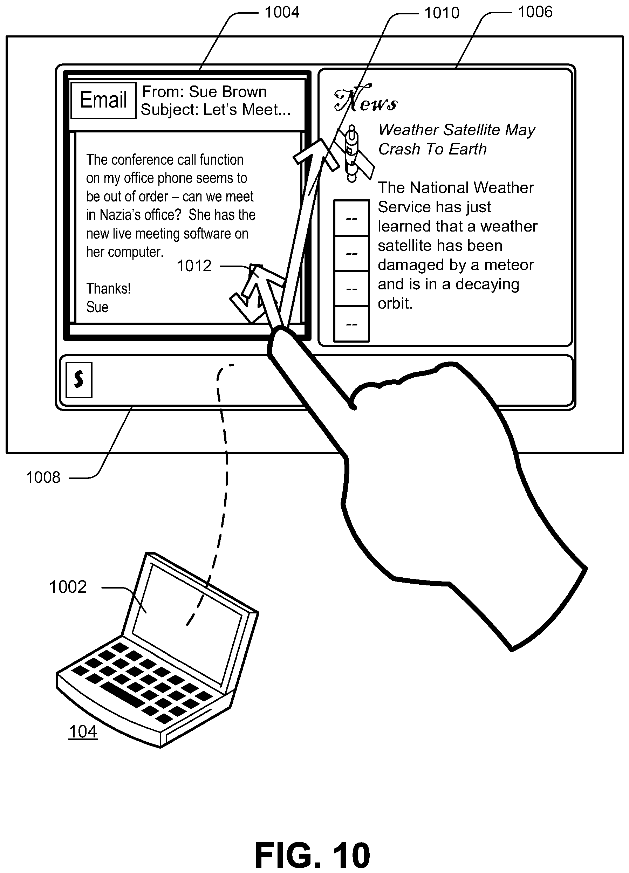

By way of example, consider Fig. 10, which illustrates a laptop computer 104 having a touch-sensitive display 1002 displaying a windows-based email interface 1004 and two immersive interfaces 1006 and 1008. Windows-based email interface 1004 is associated with an application that manages email, which can be remote or local to laptop computer 104. Fig. 10 also illustrates two gestures, 1010 and 1012. Gesture 1010 proceeds in a straight line while gesture 1012 reverses back (shown with two arrows to show two directions).

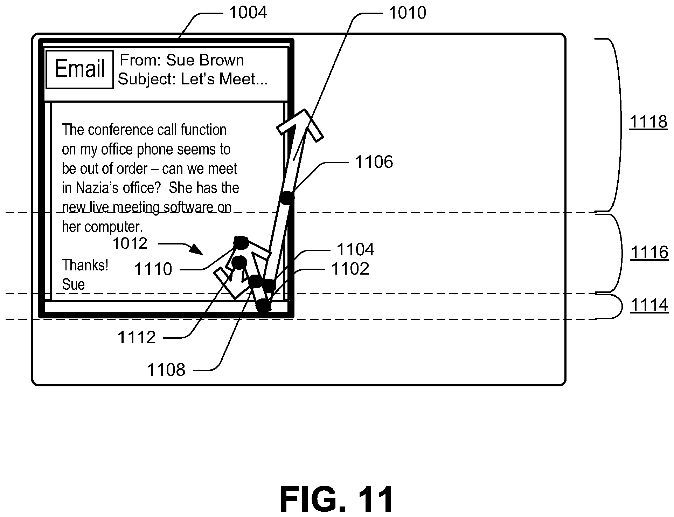

Fig. 11 illustrates gesture 1010 having a start point 1102, a later point 1104, and a successive point 1106, and gesture 1012 having a same start point 1102, a later point 1108, and a first successive point 1110, and a second successive point 1112. Fig. 11 also shows a bottom edge 1114, a later-point area 1116, and an interface-addition area 1118.

Block 904 determines, based on the successive point, whether the gesture includes a reversal, an extension, or neither. Block 904 may determine a reversal in the direction of the gesture by determining that a successive point is at the edge or is closer to the edge than a prior point of the gesture. Block 904 may determine that the gesture extends based on the successive point being a preset distance from the edge or the later point. If neither of these is determined to be true, method 900 may repeat blocks 902 and 904 to receive and analyze additional successive points until the gesture ends. If block 904 determines that there is a reversal, method 900 proceeds along "Reversal" path to block 906. If block 904 determines that the gesture is extended, method 900 proceeds along an "Extension" path to block 908.

In the context of the present example, assume that gesture handler 128 receives first successive point 1110 of gesture 1012. Gesture handler 128 then determines that first successive point 1110 is not at edge 1114, is not closer than a prior point of the gesture to edge 1114 (e.g., is not closer than later point 1108), and is not a preset distance from the edge or later point by not being within interface-addition region 1118. In such a case method 900 returns to block 902.

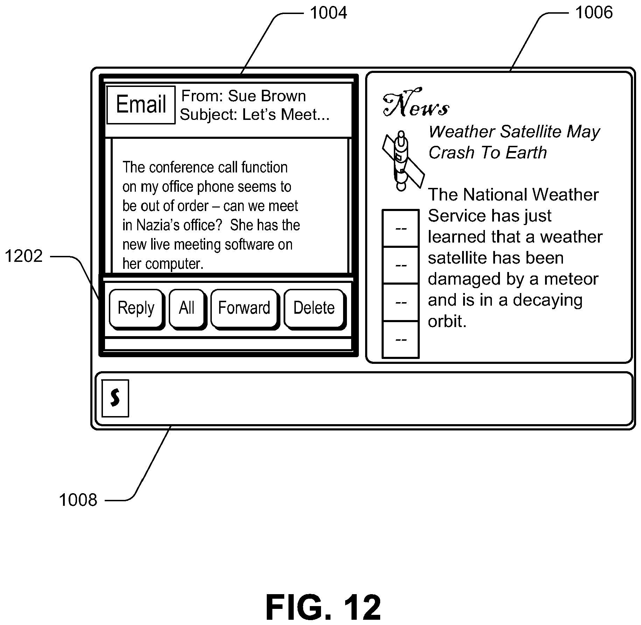

On a second iteration of block 902, assume that gesture handler 128 receives second successive point 1112. In such a case, gesture handler 128 determines that second successive point 1112 is closer to edge 1114 than first successive point 1110 and thus gesture 1012 includes a reversal. Gesture handler 128 then proceeds to block 906 to cease to present the second user interface previously presented in response to the gesture. By way of example, consider Fig. 12, which illustrates an email handling interface 1202. In this example case of block 906, gesture handler 128 causes the email application to cease to present interface 1202 in response to a reversal of gesture 1012 (not shown removed).

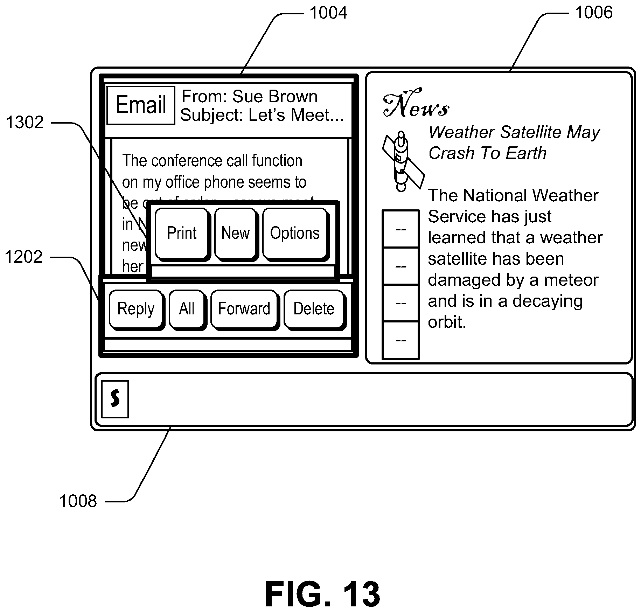

Block 908, however, presents or causes presentation of a third user interface or expansion of the second user interface. In some cases, presenting the third user interface causes the second user interface to cease to be presented, either through cancelling presentation or hiding the second user interface (e.g., presenting the third user interface over the second user interface). Continuing the ongoing example, consider Fig. 13, which illustrates additional-email-options interface 1302 in response to gesture 1010 determined to have successive point 1106 a preset distance from edge 1104, in this case being within interface-addition region 1118 of Fig. 11. This region and preset distance can be set based on a size of the user interface previously presented in response to the gesture. Thus, a user wishing to add additional controls may simply extend the gesture past the user interface presented in response to an earlier portion of the gesture.

Method 900 can be repeated to add additional user interfaces or expand a presented user interface. Returning to the example interface 702 of Fig. 7, for example, gesture handler 128 can continue to add interfaces or controls to interface 702 as gesture 308 extends past interface 702, such as by presenting an additional set of selectable application tiles. If gesture 308 extends past the additional tiles, gesture handler 128 may cause system-interface module 124 to present another interface adjacent the tiles to enable the user to select controls, such as to suspend, hibernate, switch modes (immersive to windows-based and the reverse), or shut down computing device 102.

While the above example user interfaces presented in response to an edge gesture are opaque, they may also be partially transparent. This can be useful by not obscuring content. In the movie example described above, a user interface presented can be partially transparent thereby permitting the movie to be only partially obscured during use of the user interface. Similarly, in the example of Figs. 12 and 13, interfaces 1202 and 1302 may be partially transparent, thereby enabling a user to see the text of the email while also selecting a control in one of the interfaces.

The preceding discussion describes methods in which the techniques may enable and use edge gestures. These methods are shown as sets of blocks that specify operations performed but are not necessarily limited to the order shown for performing the operations by the respective blocks.

Aspects of these methods may be implemented in hardware (e.g., fixed logic circuitry), firmware, a System-on-Chip (SoC), software, manual processing, or any combination thereof. A software implementation represents program code that performs specified tasks when executed by a computer processor, such as software, applications, routines, programs, objects, components, data structures, procedures, modules, functions, and the like. The program code can be stored in one or more computer-readable memory devices, both local and/or remote to a computer processor. The methods may also be practiced in a distributed computing environment by multiple computing devices.

### Example Device

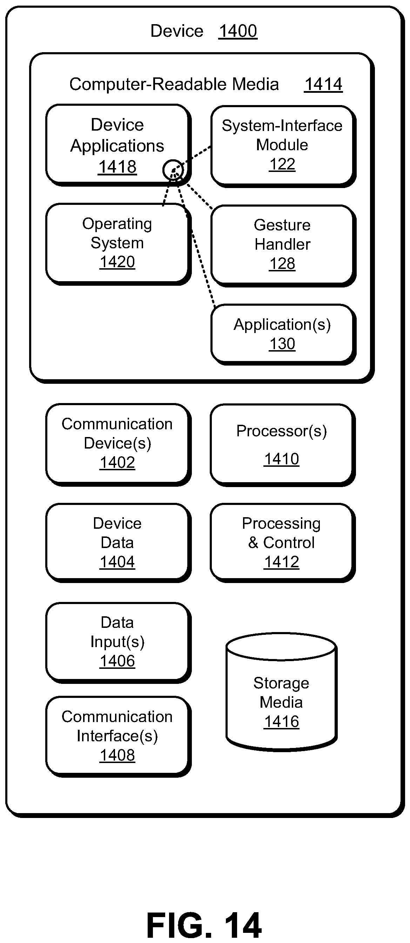

Fig. 14 illustrates various components of example device 1400 that can be implemented as any type of client, server, and/or computing device as described with reference to the previous Figs. 1-13 to implement techniques enabling edge gestures. In embodiments, device 1400 can be implemented as one or a combination of a wired and/or wireless device, as a form of television client device (e.g., television set-top box, digital video recorder (DVR), etc.), consumer device, computer device, server device, portable computer device, user device, communication device, video processing and/or rendering device, appliance device, gaming device, electronic device, and/or as another type of device. Device 1400 may also be associated with a user (e.g., a person) and/or an entity that operates the device such that a device describes logical devices that include users, software, firmware, and/or a combination of devices.

Device 1400 includes communication devices 1402 that enable wired and/or wireless communication of device data 1404 (e.g., received data, data that is being received, data scheduled for broadcast, data packets of the data, etc.). The device data 1404 or other device content can include configuration settings of the device, media content stored on the device, and/or information associated with a user of the device. Media content stored on device 1400 can include any type of audio, video, and/or image data. Device 1400 includes one or more data inputs 1406 via which any type of data, media content, and/or inputs can be received, such as user-selectable inputs, messages, music, television media content, recorded video content, and any other type of audio, video, and/or image data received from any content and/or data source.

Device 1400 also includes communication interfaces 1408, which can be implemented as any one or more of a serial and/or parallel interface, a wireless interface, any type of network interface, a modem, and as any other type of communication interface. The communication interfaces 1408 provide a connection and/or communication links between device 1400 and a communication network by which other electronic, computing, and communication devices communicate data with device 1400.

Device 1400 includes one or more processors 1410 (e.g., any of microprocessors, controllers, and the like), which process various computer-executable instructions to control the operation of device 1400 and to enable techniques enabling and/or using edge gestures. Alternatively or in addition, device 1400 can be implemented with any one or combination of hardware, firmware, or fixed logic circuitry that is implemented in connection with processing and control circuits which are generally identified at 1412. Although not shown, device 1400 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 1400 also includes computer-readable storage media 1414, such as one or more memory devices that enable persistent and/or non-transitory data storage (i.e., in contrast to mere signal transmission), examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 1400 can also include a mass storage media device 1416.

Computer-readable storage media 1414 provides data storage mechanisms to store the device data 1404, as well as various device applications 1418 and any other types of information and/or data related to operational aspects of device 1400. For example, an operating system 1420 can be maintained as a computer application with the computer-readable storage media 1414 and executed on processors 1410. The device applications 1418 may include a device manager, such as any form of a control application, software application, signal-processing and control module, code that is native to a particular device, a hardware abstraction layer for a particular device, and so on.

The device applications 1418 also include any system components or modules to implement techniques using or enabling edge gestures. In this example, the device applications 1418 can include system-interface module 122, gesture handler 128, and application(s) 130.

### Conclusion

Although embodiments of techniques and apparatuses enabling an edge gesture have been described in language specific to features and/or methods, it is to be understood that the subject of the appended claims is not necessarily limited to the specific features or methods described. Rather, the specific features and methods are disclosed as example implementations enabling and/or using an edge gesture.

## Claims

1. A computer-implemented method comprising:
receiving (202) a gesture (308, 1012, 1010) made through a gesture-sensitive display presenting one or more user interfaces (304);
determining (208) whether a line (506) from a start point (418, 1102) of the gesture (308, 1012, 1010) to a later point (508, 1104, 1108) of the gesture (308, 1012, 1010) is approximately perpendicular to an edge (402, 404, 406, 408, 1114) of one of the one or more presented user interfaces (304), wherein the later point (508, 1104, 1108) is located within the one of the one or more presented user interfaces (304) and is determined based on the later point being received a preset time after receipt of the start point or a preset distance from the start point, said determining (208) whether the line (506) is approximately perpendicular to the edge (402, 404, 406, 408, 1114) being performed if the start point (418, 1102) of the gesture (308, 1012, 1010) is determined (204) at the edge (402, 404, 406, 408, 1114), and passing (206) the gesture (308, 1012, 1010) to the one of the one or more presented user interfaces (304) if the start point (418, 1102) of the gesture (308, 1012, 1010) is not at the edge (402, 404, 406, 408, 1114, 1104); and
passing (210) the gesture (308, 1012, 1010) to another user interface (702) other than the one or more presented user interfaces (304) if the line (506) is determined to be approximately perpendicular to the edge (402, 404, 406, 408, 1114), and passing (206) the gesture (308, 1012, 1010) to the one of the one or more presented user interfaces (304) otherwise.

2. A computer-implemented method as described in claim 1, wherein the other user interface (702) is a start menu, application-selection interface, or an option interface.

3. A computer-implemented method as described in claim 1, wherein the later point of the gesture is determined based on the later point being received the preset time after receipt of the start point, and further comprising determining that the gesture (308, 1012, 1010) is of a first length or a second length, and wherein passing (210) the gesture (308, 1012, 1010) to the other user interface (702) passes the gesture (308, 1012, 1010) to a first user interface other than the one or more presented user interfaces (304) if the gesture (308, 1012, 1010) is determined to be of the first length or to a second user interface other than the one or more presented user interfaces (304) if the gesture is determined to be the second length.

4. A computer-implemented method as described in claim 1, further comprising determining whether the gesture (308, 1012, 1010) is a single-finger gesture or a multi-finger gesture and wherein the other user interface (702) is determined based on whether the gesture (308, 1012, 1010) is a single-finger gesture or a multi-finger gesture.

5. A computer-implemented method as described in claim 1, wherein passing (210) the gesture to the other user interface (702) causes the other user interface (702) to be presented on the gesture-sensitive display, thereby enabling interaction with a system of a computing device associated with the gesture-sensitive display.

6. A computer-implemented method as described in claim 5, wherein the other user interface (702) is at least partially transparent.

7. A computer-implemented method as described in claim 1, wherein passing (210) the gesture (308, 1012, 1010) to the other user interface (702) causes the other user interface (702) to be displayed and further comprising:
receiving a second gesture made through the gesture-sensitive display;
determining that the second gesture has a start point in the other user interface (702) and a later point at the edge (402, 404, 406, 408, 1114); and
responsive to determining that the second gesture has a start point in the other user interface (702) and a later point at the edge (402, 404, 406, 408, 1114), causing the other user interface (702) to cease to be displayed.

8. A computer-implemented method as described in claim 1, wherein determining whether the line (506) is approximately perpendicular includes determining whether the line (506) is within about thirty degrees of perpendicular from the edge (402, 404, 406, 408, 1114).

9. A computer-implemented method as described in claim 8, wherein one of the one or more user interfaces (304) has no window frames and another of the one or more user interfaces is a windows-based interface.

## Patentansprüche

1. Computerimplementiertes Verfahren, das Folgendes umfasst:
Empfangen (202) einer Geste (308, 1012, 1010), die durch eine gestenempfindliche Anzeige vorgenommen wird, die eine oder mehrere Benutzeroberflächen (304) bereitstellt;
Bestimmen (208), ob eine Linie (506) von einem Startpunkt (418, 1102) der Geste (308, 1012, 1010) zu einem späteren Punkt (508, 1104, 1108) der Geste (308, 1012, 1010) näherungsweise senkrecht zu einem Rand (402, 404, 406, 408, 1114) einer der einen oder der mehreren präsentierten Benutzeroberflächen (304) ist, wobei sich der spätere Punkt (508, 1104, 1108) innerhalb der einen der einen oder der mehreren Benutzeroberflächen (304) befindet und basierend auf dem späteren Punkt bestimmt wird, der eine voreingestellte Zeit nach dem Empfang des Startpunktes oder einen voreingestellten Abstand von dem Startpunkt empfangen wird, wobei das Bestimmen (208), ob die Linie (506) näherungsweise senkrecht zu dem Rand (402, 404, 406, 408, 1114) ist, durchgeführt wird, falls der Startpunkt (418, 1102) der Geste (308, 1012, 1010) an dem Rand (402, 404, 406, 408, 1114) bestimmt wird (204) und Weitergeben (206) der Geste (308, 1012, 1010) an die eine der einen oder der mehreren präsentierten Benutzeroberflächen (304), falls der Startpunkt (418, 1102) der Geste (308, 1012, 1010) nicht bei dem Rand (402, 404, 406, 408, 1114, 1104) liegt; und
Weitergeben (210) der Geste (308, 1012, 1010) an eine andere Benutzeroberfläche (702) außer der einen oder den mehreren präsentierten Benutzeroberflächen (304), falls bestimmt wird, dass die Linie (506) näherungsweise senkrecht zu dem Rand (402, 404, 406, 408, 1114) ist, und ansonsten Weitergeben (206) der Geste (308, 1012, 1010) an die eine der einen oder der mehreren präsentierten Benutzeroberflächen (304).

2. Computerimplementiertes Verfahren nach Anspruch 1, wobei die andere Benutzeroberfläche (702) ein Startmenü, eine Anwendungsauswahloberfläche oder eine Optionsoberfläche ist.

3. Computerimplementiertes Verfahren nach Anspruch 1, wobei der spätere Punkt der Geste basierend darauf bestimmt wird, dass der spätere Punkt zu der voreingestellten Zeit nach dem Empfang des Startpunkts empfangen wird, und das ferner Bestimmen umfasst, dass die Geste (308, 1012, 1010) eine erste Länge oder eine zweite Länge aufweist und wobei das Weitergeben (210) der Geste (308, 1012, 1010) an die andere Benutzeroberfläche (702) die Geste (308, 1012, 1010) an eine erste Benutzeroberfläche außer der einen oder den mehreren präsentierten Benutzeroberflächen (304) weitergibt, falls bestimmt wird, dass die Geste (308, 1012, 1010) die erste Länge aufweist, oder an eine zweite Benutzeroberfläche außer der einen oder den mehreren präsentierten Benutzeroberflächen (304) weitergibt, falls bestimmt wird, dass die Geste die zweite Länge aufweist.

4. Computerimplementiertes Verfahren nach Anspruch 1, das ferner Bestimmen umfasst, ob die Geste (308, 1012, 1010) eine Einzelfingergeste oder eine Mehrfachfingergeste ist und wobei die andere Benutzeroberfläche (702) basierend darauf bestimmt wird, ob die Geste (308, 1012, 1010) eine Einzelfingergeste oder eine Mehrfachfingergeste ist.

5. Computerimplementiertes Verfahren nach Anspruch 1, wobei das Weitergeben (210) der Geste an die andere Benutzeroberfläche (702) bewirkt, dass die andere Benutzeroberfläche (702) auf der gestenempfindlichen Anzeige präsentiert wird, wodurch eine Interaktion mit einem System einer Rechenvorrichtung ermöglicht wird, die mit der gestenempfindlichen Anzeige assoziiert ist.

6. Computerimplementiertes Verfahren nach Anspruch 5, wobei die andere Benutzeroberfläche (702) wenigstens teilweise transparent ist.

7. Computerimplementiertes Verfahren nach Anspruch 1, wobei das Weitergeben (210) der Geste (308, 1012, 1010) an die andere Benutzeroberfläche (702) bewirkt, dass die andere Benutzeroberfläche (702) angezeigt wird, und das ferner Folgendes umfasst:
Empfangen einer zweiten Geste, die durch die gestenempfindliche Anzeige vorgenommen wird;
Bestimmen, dass die zweite Geste einen Startpunkt in der anderen Benutzeroberfläche (702) und einen späteren Punkt an dem Rand (402, 404, 406, 408, 1114) aufweist; und
Bewirken, dass die andere Benutzeroberfläche (702) nicht mehr angezeigt wird, als Reaktion auf das Bestimmen, dass die zweite Geste einen Startpunkt in der anderen Benutzeroberfläche (702) und einen späteren Punkt an dem Rand (402, 404, 406, 408, 1114) aufweist.

8. Computerimplementiertes Verfahren nach Anspruch 1, wobei das Bestimmen, ob die Linie (506) näherungsweise senkrecht ist, Bestimmen, ob die Linie (506) innerhalb von etwa dreißig Grad von einer Senkrechten von dem Rand (402, 404, 406, 408, 1114) liegt, beinhaltet.

9. Computerimplementiertes Verfahren nach Anspruch 8, wobei eine der einen oder der mehreren Benutzeroberflächen (304) keine Fensterrahmen aufweist und eine andere der einen oder der mehreren Benutzeroberflächen eine fensterbasierte Oberfläche ist.

## Revendications

1. Procédé réalisé sur ordinateur, comprenant:
la réception (202) d'un geste (308, 1012, 1010) effectué à travers un dispositif d'affichage sensible aux gestes présentant une ou plusieurs interfaces utilisateur (304) ;
la détermination (208) du fait de savoir si une ligne (506) partant d'un point de départ (418, 1102) du geste (308, 1012, 1010) et allant jusqu'à un point ultérieur (508, 1104, 1108) du geste (308, 1012, 1010) est approximativement perpendiculaire à un bord (402, 404, 406, 408, 1114) d'une interface utilisateur présentée parmi la ou les interfaces utilisateur (304) présentées, dans lequel le point ultérieur (508, 1104, 1108) est situé dans l'interface utilisateur présentée parmi la ou les interfaces utilisateur présentées (304) et est déterminé en fonction du point ultérieur qui est reçu à un moment préétabli après la réception du point de départ ou à une distance préétablie à partir du point de départ, ladite détermination (208) du fait de savoir si la ligne (506) est approximativement perpendiculaire au bord (402, 404, 406, 408, 1114) étant effectuée si le point de départ (418, 1102) du geste (308, 1012, 1010) est déterminé (204) au bord (402, 404, 406, 408, 1114) et
la transmission (206) du geste (308, 1012, 1010) à l'interface utilisateur présentée parmi la ou les interfaces utilisateur présentées (304) si le point de départ (418, 1102) du geste (308, 1012, 1010) ne se trouve pas au bord (402, 404, 406, 408, 1114, 1104) ; et
la transmission (210) du geste (308, 1012, 1010) à une autre interface utilisateur (702), différente de la ou des interfaces utilisateur (304) présentées si la ligne (506) est déterminée comme étant approximativement perpendiculaire au bord (402, 404, 406, 408, 1114), et la transmission (206) du geste (308, 1012, 1010) à l'interface utilisateur présentée parmi la ou les interfaces utilisateur (304) présentées, dans le cas contraire.

2. Procédé réalisé sur ordinateur selon la revendication 1, dans lequel l'autre interface utilisateur (702) est un menu de démarrage, une interface de sélection d'application ou une interface d'option.

3. Procédé réalisé sur ordinateur selon la revendication 1, dans lequel le point ultérieur du geste est déterminé en fonction du fait que le point ultérieur est reçu au moment préétabli après la réception du point de départ, et comprenant en outre la détermination que le geste (308, 1012, 1010) a une première ou une seconde longueur, et dans lequel la transmission (210) du geste (308, 1012, 1010) à l'autre interface utilisateur (702) transfère le geste (308, 1012, 1010) à une première interface utilisateur autre que la ou les interfaces utilisateur présentées (304) s'il est déterminé que le geste (308, 1012, 1010) présente la première longueur ou à une seconde interface utilisateur autre que la ou les interfaces utilisateur (304) présentées s'il est déterminé que le geste présente la seconde longueur.

4. Procédé réalisé sur ordinateur selon la revendication 1, comprenant en outre l'étape consistant à déterminer si le geste (308, 1012, 1010) est un geste effectué avec un seul doigt ou un geste effectué avec plusieurs doigts et dans lequel l'autre interface utilisateur (702) est déterminée en fonction du fait de savoir si le geste (308, 1012, 1010) est un geste effectué avec un seul doigt ou un geste effectué avec plusieurs doigts.

5. Procédé réalisé sur ordinateur selon la revendication 1, dans lequel le fait de transférer (210) le geste à l'autre interface utilisateur (702) entraîne la présentation de l'autre interface utilisateur (702) sur le dispositif d'affichage sensible aux gestes, permettant ainsi une interaction avec un système d'un dispositif informatique associé au dispositif d'affichage sensible aux gestes.

6. Procédé réalisé sur ordinateur selon la revendication 5, dans lequel l'autre interface utilisateur (702) est au moins partiellement transparente.

7. Procédé réalisé sur ordinateur selon la revendication 1, dans lequel le transfert (210) du geste (308, 1012, 1010) à l'autre interface utilisateur (702) entraîne l'affichage de l'autre interface utilisateur (702), le procédé comprenant en outre les étapes consistant à :
recevoir un second geste effectué par le biais du dispositif d'affichage sensible aux gestes ;
déterminer que le second geste a un point de départ dans l'autre interface utilisateur (702) et un point ultérieur au niveau du bord (402, 404, 406, 408, 1114) ; et
en réponse à la détermination du fait que le second geste a un point de départ dans l'autre interface utilisateur (702) et un point ultérieur au niveau du bord (402, 404, 406, 408, 1114), faire cesser l'affichage de l'autre interface utilisateur (702).

8. Procédé réalisé sur ordinateur selon la revendication 1, dans lequel le fait de déterminer si la ligne (506) est approximativement perpendiculaire comprend le fait de déterminer si la ligne (506) se trouve à environ trente degrés de la perpendiculaire du bord (402, 404, 406, 408, 1114).

9. Procédé réalisé sur ordinateur selon la revendication 8, dans lequel une interface utilisateur parmi la ou les interfaces utilisateur (304) n'a pas de cadre de fenêtre et une autre parmi la ou les interfaces utilisateur est une interface à base de fenêtres.
